# EUROPEAN PATENT APPLICATION

(11) **EP 2 587 749 A1**
(43) Date of publication of application: **01.05.2013**
(21) Application number: 13150316.1
(22) Date of filing: 20.02.2008
(51) Int. Cl.: H04L 12/58

(54) **Digital media frame with peer to peer networking**

(30) Priority: 20.02.2007 US 708179
(62) Divisional of application: 08762752.7
(71) Applicant: Ality Limited, Causeway Bay (HK)
(72) Inventor: Wong, William, Yuen Long (CN); Fong, Ming, Yuen Long (CN)
(74) Representative: Lloyd, Patrick Alexander Desmond

(57) **Abstract**

A digital media frame is provided for display of digital media data, such as digital images. The digital media frame includes a data network interface for communications via a data network such as the Internet. The digital media frame is capable of communications using an instant messaging communications protocol, through which data such as digital images can be exchanged with other devices directly and immediately. The digital media frame can also be configured and/or controlled via a web portal by transmitting configuration or control data to the digital media frame using the instant messaging communications protocol.

## Description

### Technical Field

The present invention relates generally to displays for digital media, and more particularly to a digital media frame adapted for networked communications using a peer to peer communication protocol.

### Background of the Invention

Media of all types has become increasingly oriented around digital content. For instance, photography has become increasingly dominated by digital cameras, which capture and store images in a digital data format. However, once an image is captured digitally, it can be difficult or cumbersome to display the image. Typically, a user's digital camera (or camera memory card) must first be brought to a personal computer and connected to it. The user then downloads the image data onto the computer. While the images can then be displayed on the computer screen using appropriate software, such display is typically limited to the particular location of the computer, and the computer then cannot be used for other purposes during the time of the image display. In order to display digital photos in locations other than the site of a user's personal computer, the user often must send the digital file out for hardcopy printing. Alternatively, the user can purchase a photo printer and print media, with which software can then be used to generate a paper print. The paper print can then be framed, using a conventional photo frame, and displayed.

One alternative solution to displaying digitally-captured photos or images which has gained some degree of popularity is the digital picture frame. A digital picture frame typically contains an LCD display bordered by a frame. The digital picture frame can also include slots into which memory cards containing photos or images can be inserted. Digital images stored on the memory card can then be accessed and displayed directly. Such a device permits the user to bypass the cumbersome processes of downloading images onto a computer and/or printing those images onto paper. Digital picture frames also provide increased flexibility of the locations at which the digital images can be displayed.

While standalone digital picture frames can provide a simple and versatile means of displaying digital images around the home or elsewhere, in some circumstances it can be beneficial to provide opportunities for conveying images to a frame by means other than the direct insertion of a memory card. For example, a user may desire to convey digital photos for display on frames used by remotely-located friends or family members. To that end, it has become known to provide a digital picture frame that is network-enabled, for accessing a central image server. With such network-enabled digital picture frames, a central web site can be provided that is accessible from a computer via the Internet. The web site can be used to upload digital images onto an image server. The network-enabled picture frame includes client software such that it can access the image server, e.g. via a dialup modem or a network interface and the Internet, to download images that can subsequently be displayed on their own frames. The frame owner can then build a library of images on the image server, and/or permit selected other individuals to add images to the library and/or designate images for download to the frame. This client/server interaction permits increased control over the distribution of images for display on one or more frames.

However, as a digital picture frame product becomes increasingly popular such that the number of users and hosted images increases, the cost and maintenance requirements inherent in building and operating an image server capable of storing large numbers of images becomes increasingly burdensome. Additionally, inasmuch as many people consider personal photographs to be private information, some users may be disinclined to upload some images to an Internet-based server operated by a third party. Finally, systems utilizing a server accessible through an Internet web site are typically accessed via, e.g., a personal computer, to upload images. Thus, such systems still require both familiarity with and access to a computer each time a user desires to convey images to others.

In view of the above, it may be desirable to provide a network-enabled digital picture frame that can exchange images with other frames directly without requiring storage of those images by a central server. It may also be desirable to provide a digital picture frame which can exchange images with other frames without requiring the use of a personal computer. Some of these and other features can be achieved through the use of certain embodiments of the present invention.

### Summary of the Invention

In accordance with one aspect of the invention, a digital media frame is provided having a display, central processing unit, and memory for storing digital media data. Media presentation software implemented by the central processing unit enables the display of digital media data stored in the memory. A data network interface, such as a wireless Ethernet adapter, is provided to enable the digital media frame to communicate via a data network, such as the Internet. The media frame implements peer-to-peer communications software for exchanging data with a second device implementing compatible peer-to-peer communication software software. Preferably, the peer-to-peer communication software includes an instant messaging application. In some embodiments, the instant messaging applications can be implemented to permit the direct, near-real time, peer-to-peer exchange of data with other devices.

In accordance with one embodiment of the invention, digital images can be exchanged directly between two digital media frames via using peer-to-peer, and preferably instant messaging, communication protocols. In other embodiments, digital images can be exchanged between a digital media frame and other disparate devices implementing compatible peer-to-peer or instant messaging software, such as a cameraphone or PDA. In addition to digital images, other types of digital media data can be exchanged using peer-to-peer or instant messaging communication protocols, such as audio files and/or video files. The digital media frame may further include a text chat client application and a text entry user interface, so that the digital media frame can be used to exchange text chat information with a remote device, using the instant messaging software, the media frame display and the text entry user interface.

A method is also provided, for transmitting digital media data from a first digital media frame to a second digital media frame. The method includes the steps of identifying the network location and availability of the first digital media frame by the second digital media frame, and identifying the network location and availability of the second digital media frame by the first digital media frame. The method further includes the steps of establishing a peer-to-peer communications link, preferably an instant messaging connection, between the first and second digital media frames, and transmitting the digital media data from the first frame to the second, via the communications link. Preferably, the instant messaging connection is a direct, peer-to-peer instant messaging connection, such as a streaming XML connection.

A method for communicating digital media data between a digital media frame and a disparate second device is also provided. First, a direct, peer-to-peer communications link, preferably an instant messaging connection, is established between the digital media frame and the second device. Next, digital media data is exchanged using the link or instant messaging connection. In some embodiments, the second device may be a cameraphone, such that digital image data recorded by the cameraphone can be transmitted to the digital media frame for subsequent display on the digital media frame.

Also described is a method for remotely controlling a digital media frame. The method can involve the provision of a web portal accessible via the Internet. One or more digital media frame operating parameters can be specified via the web portal. A peer-to-peer communications link, preferably an instant messaging communications link, is established with the digital media frame, and control messages are transmitted to the media frame via that link. The media frame responds to the control messages by updating one or more digital media frame operating parameters, such as the current image displayed or an image sequence for a slide show. A remote control software application can be implemented on the digital media frame for responding to control messages. Accordingly, in some embodiments, it is possible to use the web portal to control the operation of the digital media frame in near-real time.

The digital media frame can also be remotely controlled by remote peer-to-peer messaging clients, such as a PDA, a cellular telephone or other digital media frames. One or more operating parameters are specified using the remote messaging client. Peer-to-peer messaging communication links, such as instant messaging links, are established between the digital media frame and the remote messaging client. Control messages are then transmitted to the digital media frame via the peer-to-peer communications link. The digital media frame responds to the control messages by updating one or more operating parameters. The control messages may include authentication information, which is verified by the recipient digital media frame before updating operating parameters. Thus, a remote messaging client can be used to control the digital media frame. In some embodiments, one digital media frame can thereby be used to control the operation of one or more remote digital media frames via peer-to-peer communications.

Finally, a method for displaying information on a digital media frame is also provided. The method involves the step of providing a content server adapted to mine third party data from one or more third party data sources, such as Internet web sites. The mined data is optionally formatted, and then forwarded to an instant messaging server. The instant messaging server establishes an instant messaging communications link with the digital media frame, and transmits the mined data to the digital media frame thereby, for display on the digital media frame. A web portal for the content server can be provided whereby a user can configure the nature of the data mining operation.

### Brief Description of the Drawings

FIGURE 1 is a perspective view of a digital media frame.
FIGURE 2 is a schematic hardware block diagram of a digital media frame.
FIGURE 3 is a schematic block diagram of a digital media frame software stack.
FIGURE 4 is a network diagram of a system incorporating a plurality of digital media frames implementing peer-to-peer communications.
FIGURE 5 is a network diagram of a system for configuring and/or controlling a digital media frame from a remote PC.
FIGURE 6 is a network diagram of a system for conveying information from remote network sources to a digital media frame.

### Detailed Description

While this invention is susceptible of embodiment in many different forms, there are shown in the drawings and will herein be described in detail, certain specific embodiments with the understanding that the present disclosure should be considered as an exemplification of the principles of the invention and is not intended to limit the invention to the embodiments so illustrated.

FIGURE 1 depicts a digital media frame, in accordance with one embodiment of the invention. Digital media frame 100 includes display 110, which is preferably a LCD display panel. Display 110 is surrounded by frame housing 102. Frame housing 102 includes a plurality of buttons 106 to enable interaction between a user and the digital media frame. Digital media frame 100 also includes stand 104, which enables the device to stand upright on a flat surface, such as a tabletop. Optionally, stand 104 can be excluded to facilitate wall mounting of the digital media frame.

FIGURE 2 is a schematic block diagram of hardware components from which digital media frame 100 is comprised. Display 110 interacts with a main circuit board 200. Amongst the components on main board 200 is memory 212. Memory 212 is preferably a non-volatile, random access memory which is adapted to store digital media data (such as images) and/or software instructions for controlling the operation of digital media frame 100. Memory 212 is controlled by CPU and image engine portion 210, which preferably includes a microprocessor or microcontroller.

CPU and image engine 210 controls the flow of information to and/or from memory 212. CPU 210 includes an image engine portion which is capable of generating image information for display on display 110, based upon data stored in memory 212, amongst other functions. The image engine portion of CPU 210 is also adapted for decoding of various image formats (such as JPEG, BMP and PGN), image manipulation (such as conversion to black-and-white or sepia tone images), and scaling of image data for display on LCD display 110 or for storage in memory or memory cards. CPU and image engine 210 may also optionally include functionality for the decoding of other types of digital media data, including video data (such as MPEG4 or Motion JPEG), and audio data (such as MP3 and WAV files).

Power management portion 218 and battery charger 220 control the supply of power to the components of digital media frame 100 from an external power supply and/or rechargeable battery. Real time clock 222 provides a time and date reference to CPU 210 to enable the identification of time and date by a calendar application and/or other software applications implemented on the media frame.

Digital media frame 100 is further adapted for communications with a data network. While it is understood that data network communications can be implemented through different data network interfaces, in a preferred embodiment and as illustrated in FIGURE 2, digital medial frame 100 is equipped with a wireless Ethernet adapter enabling communications over a wireless Ethernet network connected to the Internet. Use of a wireless Ethernet adapter or other wireless communications protocol provides increased flexibility in the location and positioning of digital media frame 100, since the media frame need not be directly connected to a data network via a physical cable. In the embodiment of FIGURE 2, digital media frame 100 is provided with wireless network interface 216, which is capable of conveying data between CPU 210 and wireless network 270.

Digital media frame 100 is capable of receiving input from users via buttons 106, keyboard 250 and/or remote controller 260. Buttons 106, situated on the face of media frame housing 102, can be depressed by a user to navigate and control a user interface that is implemented by CPU 210 and display panel 110. Remote 260 provides a means of controlling digital media frame 100 remotely from the frame, such as via infrared control signals. By providing for remote control of media frame 100, a user can accomplish tasks such as changing the image or information provided on display 110 from a remote location, without moving to the location of the frame. Keyboard 250 can optionally be attached to digital media frame 100 to enable rapid input of text data, as further described below.

Digital media frame 100 is also provided with a variety of ports which make up external interface 224. Amongst the elements of external interface 224 are DC power jack 232, which can be used to power the media frame, and optionally, to charge an internal battery power source through optional battery charger 220. External interface 224 further includes ports such as video output 234, enabling output of the image from LCD panel 110 to an external display. USB ports 236 and 238 enable connection of media frame 100 to other devices, such as a personal computer, a PrintBridge-enabled printer, or a USB data storage device. Finally, card reader 230 accepts a variety of types and sizes of digital memory cards to enable reading of image data from the cards by CPU 210.

Figure 3 is a diagram of a software stack implemented by digital media frame 100. Hardware layer 330 provides connectivity with various portions of the frame hardware described in FIGURE 2. A device driver layer 320 is provided to establish protocols by which communications and control can be established between CPU 210 and various components of the media frame hardware.

Above device driver layer 320 are kernel 312, file system 314 and TCP/IP stack 316. Kernel 312 provides fundamental processing and input/output capabilities for CPU 210. File system 314 provides a mechanism for the storage and recollection of data by CPU 210. For example, file system 314 can implement the recording and reading of data to and from memory cards that are inserted into card reader 230, the deletion of data from memory cards, formatting of memory cards, and the creating and searching of memory card directories. TCP/IP stack 316 implements the TCP/IP protocol for data communications between CPU 210, wireless data network interface 216, and ultimately, wireless network 270. Operating system layer 310 provides a programming and user interface for enabling higher software layers, including application layer 300 and applications 302 and 304, to utilize lower layers of the software stack.

Finally, the software stack of FIGURE 3 includes application layer 300. Amongst the applications implemented in the application layer of media frame 100 are peer-to-peer applications 302 and PhotoFrame user interface 304.

Photoframe user interface 304 enables a user to control the functionality of media frame 100. In particular, media frame 100 can be controlled to display digital images stored in memory 212 on LCD panel 110. Additionally, media frame 100 can be controlled via user interface 304 to display digital images stored in a memory card engaged with card reader 230.

In addition to displaying images stored locally on a digital memory card, digital media frame 100 is also capable of networked communications to send and receive images or other information to and from remote devices. FIGURE 4 is a block diagram of a communications network in which network communications features of digital media frame 100 can be utilized. The digital media frame is capable of communicating to other devices on Internet 410, by utilizing wireless network interface 216 and wireless network 270.

Amongst the applications implemented in application layer 300 of the digital media frame software stack are peer to peer applications 302. Unlike many prior digital picture frame products in which data transmissions to a picture frame are coordinated through a central server, peer to peer applications 302 enable media frame 100 to set up and conduct data communications directly, with a number of independent devices, including other media frames 402 and 404, service provider 420, PDA 434, cellular telephone 432 and computer 430.

More particularly, peer to peer applications 302 include an instant messaging client. The instant messaging client provides a platform for conducting direct, near real-time data communications via the Internet with other networked devices running compatible instant messaging client software. A number of instant messaging protocols, such as protocols used for personal computer-based Internet chat functions, are known and can be beneficially implemented by media frame 100. One such instant messaging protocol that can be implemented is Jabber, described at http://www.jabber.org. In an embodiment of the invention utilizing the Jabber communication protocol, peer to peer software application layer 302 includes an open source Jabber server application.

While peer to peer applications 302 preferably include an instant messaging application, it is also contemplated that other types of peer-to-peer communications applications can be implemented in accordance with digital media frame 100. For example, peer-to-peer applications 302 could include a file sharing application similar to applications such as Kazaa, or other file sharing applications which are commonly used by personal computers to exchange software and data files. By implementing a peer-to-peer file sharing client directly within media frame 100, media and control/configuration data can be directly exchanged between multiple media frames and/or other devices implementing compatible communications software.

In accordance with one operation supported by digital media frame 100, digital images can be transmitted directly to peer digital media frame 402. First, media frames 100 and 402 report their network locations to service provider instant messaging server 422 via Internet 410. Then, media frame 100 queries server 422 to determine the presence, availability and network location of previously-identified devices, such as other media frames owned by friends and family members. Once the presence and locations of other devices are determined, a user of media frame 100 can select an available device for communications. For example, the user of media frame 100 can select media frame 402 for receipt of a digital image.

Once media frame 402 is selected, the instant messaging application resident on media frame 100 communicates with an instant messaging application on media frame 402, to open a streaming XML messaging connection, such that data can be communicated between them directly. When the connection is established, CPU 210 reads selected image data from memory 212 or card reader 230. That data is then transmitted using wireless Ethernet interface 216 and wireless network 270, to media frame 402 via Internet 410, Media frame 402 then permits a user to confirm the saving of the image data, and to display the image.

In addition to enabling the direct communication of images with other digital media frames, by implementing a digital media frame using an instant messaging application that can be implemented on a variety of platforms, digital media data can be exchanged between media frame 100 and any of a variety of disparate devices running a compatible messaging application. This capability can function to significantly improve the usability of a digital media frame device, particularly as compared to certain prior art digital picture frame systems in which images or other digital media would first have to be transferred to a personal computer (such as via a USB cable and PC operating system interface), then uploaded from the personal computer to a central server via a web site, before eventually propagating down to a digital picture frame. For example, in an embodiment in which media frame 100 implements a Jabber messaging server, images can be directly and immediately sent to or received from cellular telephone 432 and/or PDA 414, both of which run compatible instant messaging clients. Thus, if a user of cellular telephone 432 takes a photograph using an integrated digital camera feature, that image can be immediately sent directly to media frame 100 via instant message. Similarly, if an individual views an image on media frame 100 that the individual would like to use as a PDA desktop image, media frame 100 can be used to instant message the desired image directly to PDA 434. By implementing an open source instant messaging communications protocol, interoperability with a wide variety of devices can be provided, such that a user has a number of mechanisms through which images can be transferred to and from the digital media frame.

In addition to the direct exchange of digital images, the instant messaging server application implemented on media frame 100 can be used for text-based Internet chat communications. For example, media frame 100 can open messaging connections with any compatible instant messaging clients, including other media frames 402 and 404, computer 430, cellular telephone 432 and PDA 434. A text chat client application can be implemented in software application layer 300 (FIGURE 3) to enable the display of text communications received via instant messaging from other instant messaging clients, as well as the entry of text for transmission to other instant messaging clients. In such an embodiment of the invention, it may be desirable to utilize a text entry user interface which enables quick and efficient entry of text by a user of digital media frame 100, such as keyboard 250 (FIGURE 2). In any event, the digital media frame can provide an additional access point from which instant messaging communications can be conducted. Moreover, since digital media frames may often reside in locations not otherwise occupied by a computer, the use of a digital media frame implementing Internet chat communications provides an additional level of flexibility in a user's communication capabilities.

In accordance with another aspect of the invention, media frame 100 is capable of displaying types of media other than digital images, such as digital video and audio information. For example, emory cards engaged with card reader 230 may contain MP3 audio files. Digital media frame 100 can then implement a software application on application layer 300 which periodically displays one of a number of different images in a slide show format, while simultaneously playing the stored audio file as music to accompany the slide show presentation. The peer to peer instant messaging capabilities of media frame 100 can thus also be used to transfer audio and/or video data files directly between media frame 100 and peer devices 402, 404, 430, 432 and/or 434.

Digital media frame 100 is also capable of retrieving information contained in RSS feeds. RSS is a format supported by many web sites for delivering regularly changing web content. Digital media frame 100 includes an RSS aggregator client implemented in application layer 300 of the software stack of FIGURE 3. The RSS aggregator client can be configured to periodically retrieve syndicated web site information via Internet 410 and display that information using LCD panel 110.

FIGURE 5 illustrates another embodiment of the invention, in which control and/or configuration of the digital media frame is provided from remote access points, using the peer-to-peer communications channel. In accordance with one embodiment of the invention, illustrated in FIGURE 5, a web portal is provided for access to and control of media frame 100. Service provider 420 hosts a web portal on application server 424, which is accessible by personal computer 430 via Internet 410B. The web portal is accessed using an Internet web browser, and it provides a user interface through which the user of PC 430 can accomplish a variety of operations. For example, the user can manage a virtual album of photos, upload photos for conveyance to digital media frame 100, organize photo content for sharing with other media frame devices or instant messaging clients, and synchronize data with digital media frame 100. Once the user performs a transaction requiring the transmission of data to media frame 100, application server 424 conveys the data to IM server 422, which promptly initiates an instant messaging connection for immediate transmission of the data to media frame 100 via Internet 410A.

The web portal of application server 424 can also provide a rich user interface for easily and directly configuring and controlling the operation of media frame 100. For example, the web portal can present a user interface by which the user of PC 430 can control digital media frame operating parameters, such as the currently-displayed image, a sequence for a slide show, scheduled events and the like. As soon as an aspect of the device configuration is changed on application server 424, a corresponding message is sent to instant messaging server 422 for prompt conveyance to digital media frame 100. Upon receiving the corresponding message, digital media frame 100 can implement the requested change. A remote control software application can be implemented on application layer 300 (FIGURE 3) in order to receive, process and respond to configuration change messages received from application server 424 via instant messaging server 422.

Thus, by implementing an instant messaging communication protocol by both digital media frame 100 and service provider 420, systems implemented by service provider 420 can instantly and directly control and configure media frame 100. This use of instant messaging protocols eliminates the need in many prior systems for regular and periodic polling of a central server by a remote digital picture frame to determine whether updates or changes are required. Accordingly, compared to such systems, the communications bandwidth required by the service provider can be significantly reduced, while near-real time control of digital media frame 100 is enabled.

The peer-to-peer messaging capabilities of digital media frame 100 also enable the direct control and configuration of the media frame from other clients having like messaging capabilities. For example, PDA 434 is provided with software enabling the transmission of control messages to media frame 100, similarly to the above-described web portal. However, since PDA 434 includes a client for direct instant messaging communications with media frame 100, the configuration of media frame 100 by PDA 434 can take place pursuant to direct messaging via Internet 410A, such that intervening servers need not be utilized. Configuration and control messages sent from PDA 434 are embedded with authentication information, which is verified by media frame 100 prior to implementing actions contained in the messages. The implementation of direct control and configuration of media frame 100 using peer-to-peer messaging enables further opportunities for user control of the media frame, without added bandwidth or communication burdens on a central service provider.

The above-described use of peer-to-peer control messages to manage the operation and configuration of a media frame also enables the coordination and control of a plurality of media frames from a single device. For example, a user may operate numerous media frames throughout the user's home. In such a system, a single media frame can be operated to control the operation of other media frame devices on the network, through direct peer-to-peer control messaging.

FIGURE 6 illustrates another aspect of the invention, in which digital media frame 100 operates as a display for information mined from the Internet by a service provider content server. Specifically, service provider 420 implements content server 426. Content server 426 operates to mine information from one or more third party data sources 600. Third party data sources may include web sites for news organizations, weather forecasts, stock quotes and other types of information. In accordance with one type of operation, content server 426 can be configured to periodically access data provided by third party data sources 600 via Internet 410B. Some or all of the data retrieved by content server 426 can then be formatted and/or extracted for use or display by digital media frame 100. The formatted and/or extracted information is then transferred to instant messaging server 422, for near-real time transmission to digital media frame 100. Depending upon its mode of operation, digital media frame 100 can then display the desired information.

Content server 426 may include a web portal accessible by PC 430 via Internet 410B. The content server web portal can be used to control the content, formatting and/or delivery of information from content server 426 to digital media frame 100. For example, content server 426 can be configured to retrieve a current weather report at 6:00 a.m. each morning, and send the weather report to digital media frame 100 for immediate display, so that the user of media frame 100 will have an up-to-date forecast available when beginning the day. Similarly, content server 426 may be configured to retrieve stock quotes for a portfolio of stocks just after the markets close each day, and transmit those quotes to digital media frame 100 for immediate display. By utilizing scheduled data mining, combined with near-real time delivery via instant messaging protocols, digital media frame 100 is capable of displaying current and relevant information to a user while minimizing the amount of data that must be stored by the media frame, and reducing the bandwidth that may otherwise be required for data communications in systems requiring regular periodic polling of information.

The invention may be embodied in one or more of the following clauses:
1. A digital media frame comprising: a display; a central processing unit; memory capable of storing digital media data; media presentation software implemented at least in part by the central processing unit for displaying the digital media data on the display; a data network interface; instant messaging software implemented at least in part by the central processing unit for exchanging data with a second device implementing instant messaging software via the data network interface.
2. The digital media frame of clause 1, further comprising a digital image stored in the memory; and wherein the instant messaging software further comprises software for exchanging the digital image with a second digital media frame using instant messaging communication protocols.
3. The digital media frame of clause 1, wherein the data network interface includes a wireless Ethernet adapter.
4. A method for transmitting digital media data from a first digital media frame to a second digital media frame, the method comprising the steps of: identifying the network location and availability of the first digital media frame by the second digital media frame; identifying the network locations and availability of the second digital media frame by the first digital media frame; establishing an instant messaging connection between the first digital media frame and the second digital media frame; transmitting the digital media data from the first digital media frame to the second digital media frame via the instant messaging connection.
5. The method of clause 4, in which the step of establishing an instant messaging connection is further comprised of the step of establishing a direct, peer-to-peer instant messaging connection between the first digital media frame and the second digital media frame.
6. The method of clause 5, in which the direct, peer-to-peer instant messaging connection is a streaming XML connection.
7. The method of clause 4, in which the digital media data is a selected digital image, the method further comprising the step of selecting the selected digital image from amongst one or more images stored in the first digital media frame.
8. A method for communicating digital media data between a digital media frame and a disparate second device, the method comprising the steps of: establishing a direct, peer-to-peer instant messaging connection between the digital media frame and the second device; exchanging the digital media data between the digital media frame and the second device using the instant messaging connection.
9. The method of clause 8, in which the second device is a mobile telephone containing a digital camera, and the digital media data is a cameraphone image recorded by the mobile telephone digital camera, wherein the step of exchanging the digital media data is further comprised of the substep of transmitting the cameraphone image from the mobile telephone to the digital media frame via the instant messaging connection.
10. The digital media frame of clause 1, in which: the digital media frame further comprises a text entry user interface; and the instant messaging software is further comprised of a text chat client application communicatively connected with remote text chat instant messaging client software implemented on the second device.
11. A method for controlling the operation of a digital media frame, the method comprising the steps of: providing a web portal accessible via the Internet; specifying one or more operating parameters for the digital media frame via the web portal; establishing an instant messaging communications link with the digital media frame; transmitting a control message to the digital media frame via the instant messaging communications link; responding to the control message by the digital media frame by updating one or more digital media frame operating parameters; whereby the web portal can be used to control the operation of the digital media frame.
12. The method of clause 11, in which the step of specifying one or more operating parameters is comprised of the step of specifying the image to be displayed on the digital media frame.
13. The digital media frame of clause 1, further comprising a remote control software application implemented at least in part by the central processing unit, adapted for responding to messages received by the instant messaging software to alter the operation of the media presentation software.
14. A method of displaying information on a digital media frame, the method comprising the steps of: providing a content server adapted to retrieve third party data from one or more third party data sources; forwarding the third party data to an instant messaging server; establishing an instant messaging connection between the instant messaging server and the digital media frame; transmitting the third party data to the digital media frame via the instant messaging connection; displaying the third party data on a display screen of the digital media frame.
15. The method of clause 14, further comprising the step of providing a web portal for specifying the content of the third party data.

The foregoing description and drawings merely explain and illustrate the invention and the invention is not limited thereto, inasmuch as those skilled in the art, having the present disclosure before them will be able to make modifications and variations therein without departing from the scope of the invention.

## Claims

1. A method for controlling the operation of a digital media frame from a remote messaging client, the method comprising the steps of:
specifying one or more operating parameters for the digital media frame via the remote messaging client;
establishing a peer-to-peer messaging communications link between the digital media frame and the remote messaging client;
transmitting a control message to the digital media frame via the peer-to-peer communications link;
responding to the control message by the digital media frame by updating one or more digital media frame operating parameters;
whereby the remote messaging client can be used to control the digital media frame.

2. The method of claim 1, in which the step of transmitting a control message to the digital media frame is further comprised of the substep of transmitting a control message to the digital media frame via an instant messaging communications protocol.

3. The method of claim 1, in which:
the step of transmitting a control message to the digital media frame via the peer-to-peer communications link is further comprised of the substep of transmitting authentication information to the digital media frame via the peer-to-peer communications link; and
the method is further comprised of the step of verifying that the authentication information is valid prior to the step of updating one or more digital media frame operating parameters.

4. The method of claim 1, which method is further comprised of the step of providing a remote messaging client which is a second digital media frame; whereby the second digital media frame can be used to control the operation of one or more other digital media frames.
